# EUROPEAN PATENT SPECIFICATION

(11) **EP 3 634 806 B1**
(45) Date of publication and mention of the grant of the patent: **25.12.2024**
(21) Application number: 18742594.7
(22) Date of filing: 04.06.2018
(51) Int. Cl.: B60Q 1/068

(54) **A DEVICE FOR POSITIONING A LIGHTING BODY**
VORRICHTUNG ZUR POSITIONIERUNG EINES BELEUCHTUNGSKÖRPERS
DISPOSITIF DE POSITIONNEMENT D'UN CORPS D'ÉCLAIRAGE

(30) Priority: 07.06.2017 SI 201700158
(43) Date of publication of application: 15.04.2020
(73) Proprietor: Hella Saturnus Slovenija Proizvodnja Svetlobne Opreme Za Motorna In Druga Vozila, D.O.O., 1000 Ljubljana (SI)
(72) Inventor: AHEC, Ziga, 1290 Grosuplje (SI); PETRLIN, Darko, 1000 Ljubljana (SI); RUPAR, Matej, 1000 Ljubljana (SI)
(74) Representative: Zacco GmbH
(86) International application number: PCT/IB2018/053964
(87) International publication number: WO 2018/224938

(56) References cited:
- EP-A1- 2 650 173
- EP-A2- 1 873 445
- DE-A1- 102012 024 050
- DE-A1- 102012 111 311
- FR-A1- 2 722 460
- JP-A- 2013 203 392
- KR-U- 19980 013 184
- US-A- 5 186 532
- US-A1- 2011 085 346
- US-B2- 6 513 960

## Description

The present invention refers to a device for positioning a lighting body, in particular a lighting body of a vehicle, such as a headlamp, a fog lamp and similar.

A device for positioning a lighting body of the aforementioned kind has been disclosed in the patent No. EP 1 739 346 B1, for instance. Said device cooperates with the lens holder for pivoting the lens holder along an adjusting axis of the device. The positioning device is selected as an endless screw type adjusting screw extending vertically, where the source, the lens, the holder and the part are integrated in the case. Said adjusting screw cooperates with a tongue provided with a thread by means of which either the case or the light source can be adjusted. A drawback of the disclosed solution lies in the tongue, which is moved along a circular arc together with the case to be adjusted. Simultaneously, also the thread of said tongue cooperating with the adjusting screw travels along the circular arc, resulting in a significant load of the threads. Said overload may result in a fracture of one or several threads and in a failure of the positioning device operation.
DE 10 2012 111 311 A1 describes a device for positioning a lighting body comprising a case with an articulated light module arranged therein, said module being rotatable about the centreline thereof which extends approximately horizontally and/or approximately perpendicularly to the direction of the luminous flux, and a device for positioning the light module, wherein the device for positioning the light module with respect to a horizontal centreline of the lighting body and, respectively, with regard to the ideal direction of the luminous flux is arrangeable on said case, said device for positioning the light module is formed of at least two actuators set at an angle with respect to each other and mutually cooperating, and a follower associated with said light module, wherein said follower is formed with a fork-like structure comprising threaded plates that extend mutually in parallel and are spaced with regard to each other and are attached at the first end thereof to a base of the follower, said threaded plates being formed in the region of cooperation with a threaded section of the actuator with a threaded section, which comprises an internal thread provided for cooperation with an outer thread of the threaded section.
Further prior art is known from EP 2 650 173 A1.

It is the object of the present invention to create a device for positioning a lighting body which remedies drawbacks of the known solution.

According to the present invention, the object as set above is solved by features set forth in the characterising part of claim 1. Detail of the invention is disclosed in respective subclaims.

The invention is further described in detail by way of non-limiting embodiment, and with a reference to the accompanying drawings, where
- Fig. 1: shows a partial section in the vertical plane of a lighting body of the vehicle in a three-dimensional schematic view;

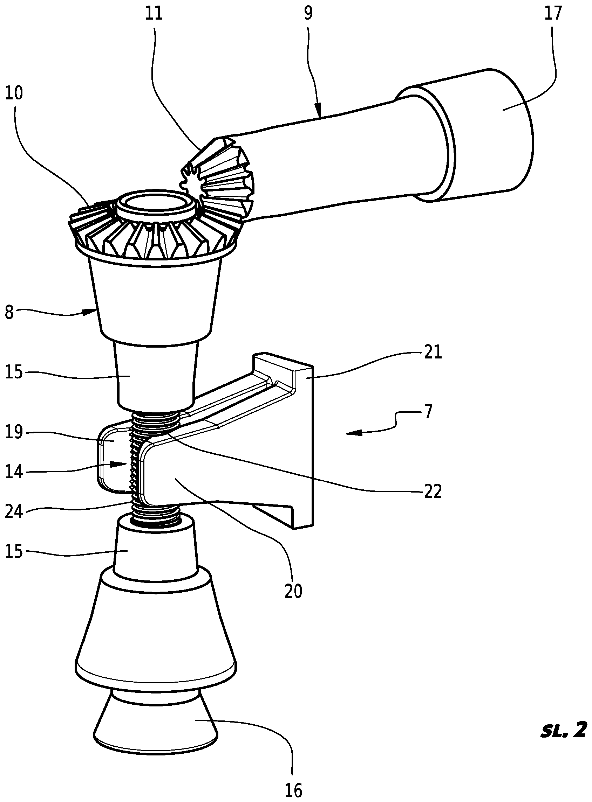

- Fig. 2: shows a three-dimensional schematic view of the device for positioning the lighting body;

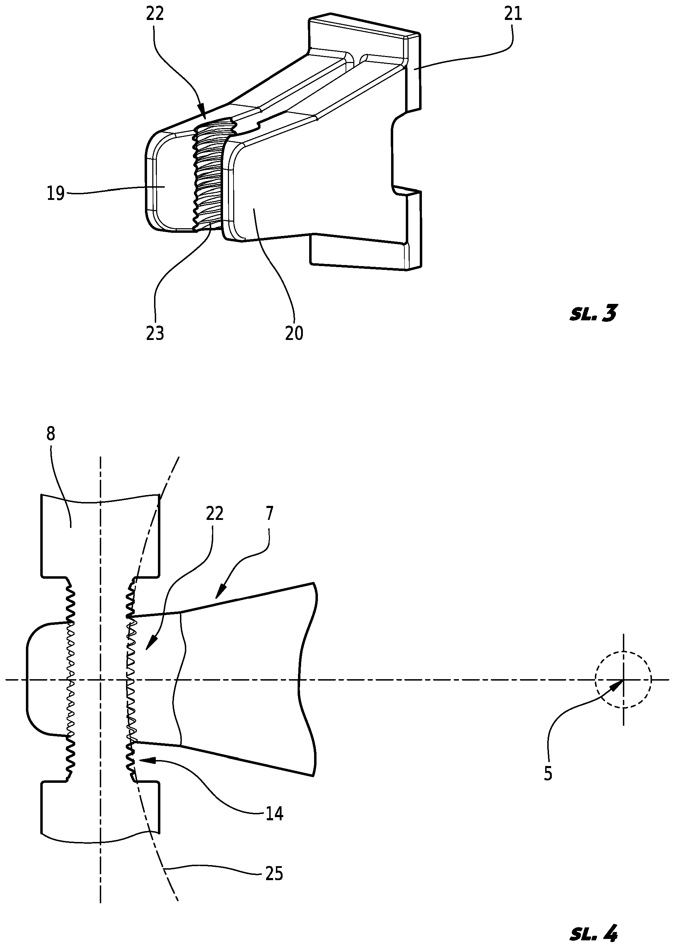

- Fig. 3: shows a three-dimensional schematic view of a follower; and
- Fig. 4: shows a partial section of the follower in a three-dimensional schematic view, in direction of an arrow IV.

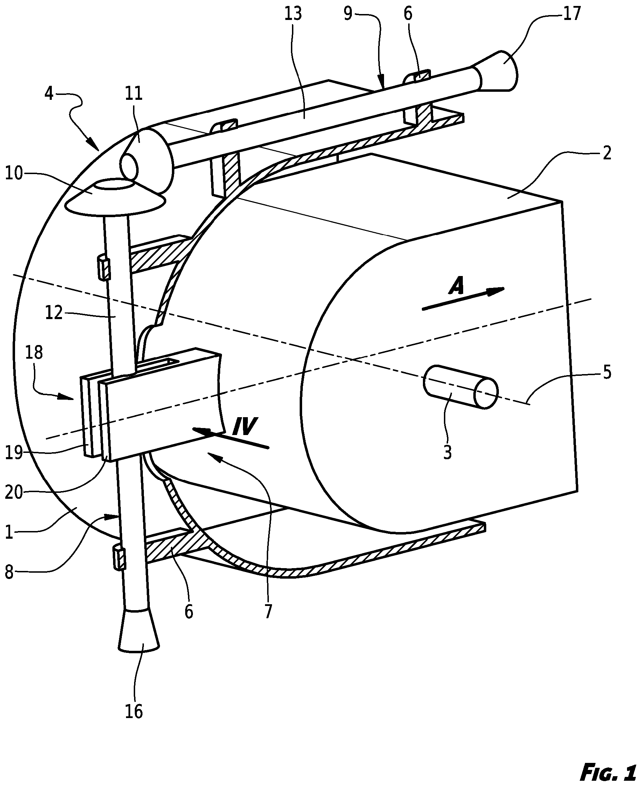

A lighting body of a vehicle shown schematically in Fig. 1 comprises a case 1 with an articulated light module 2 arranged therein, such as a light source, a reflector of the lighting body, and similar. Said module 2 is rotatable about the centreline 3 thereof which, in the present embodiment, extends approximately horizontally and/or approximately perpendicularly to the direction A of the luminous flux. Furthermore, a device 4 for positioning the light module 2 with respect to a horizontal centreline 5 of the lighting body and, respectively, with regard to the ideal direction A of the luminous flux is arranged on the case 1. Said device 4 for positioning the light module 2 is fixed by means of fixing means 6, wherein it cooperates simultaneously with a follower 7 associated with said light module 2. Said follower 7 can be formed either as an integral part of the light module 2, or as a separate element which is attached to the light module 2 in a manner known per se. Said device 4 for positioning the light module 2 is connected with said follower 7 by means of a force-locking joint and/or a form-locking joint.

Said device 4 for positioning the light module 2 is formed of at least two actuators 8, 9 and said follower 7, wherein said actuators 8, 9 are set at an angle to each other and cooperate with each other, and wherein each actuator 8, 9 comprises at the place of the cooperation with the opposite actuator 9, 8 a transfer means 10, 11 mating with each other. Said transfer means 10, 11 are provided for transfer of motion from the first actuator 8 and, respectively, 9 to the second actuator 9 and, respectively, 8, the transfer means 10, 11 being selected in the present embodiment as a pair of bevelled gears 10, 11, for example. Furthermore, each actuator 8, 9 comprises a stem 12, 13 extending away from each transfer means 10, 11 in direction towards at least one free end of the lighting body according to the invention. Said actuators 8, 9 are fixed by means of the connection of the fixing means 6 with the stem 12, 13, wherein a rotational movement of the actuator 8, 9 about the centreline thereof is enabled in each fixing means 6. Thus, transfer of the rotational movement from the first actuator 8 and, respectively, 9 to the second actuator 9 and, respectively, 8 is achieved via the transfer means 10, 11. At least part of the stem 12, 13 of at least one of the actuators 8, 9 is formed in the region of the two neighbouring fixing means 6 with a threaded section 14 provided for mating and cooperating with said follower 7. The length of said threaded section 14 exceeds the dimension of the follower 7 in direction of the extension of the stem 12, 13 of the actuator 8, 9. To each end of the threaded section 14 there is attached a shifting section 15 the radial dimension thereof is larger then the radial dimension of the threaded section 14. Further, the free end of each actuator 8, 9 is formed with a projection and/or a depression 16, 17 for engaging a tool to enter a torque into at least one of the actuators 8, 9. Optionally, at least one end of the actuator 8, 9 provided with the transfer means 10, 11 is additionally formed with a projection and/or a depression for engaging a tool to enter a torque into at least one of the actuators 8, 9.

Said follower 7 is either an integral part of the light module 2, or is associated with the latter in a removable manner. At the side averted from the light module 2 the follower 7 is formed with a fork-like structure 18 comprising threaded plates 19, 20 that extend mutually in parallel and are spaced with regard to each other. Simultaneously, said threaded plates 19, 20 extend in parallel also with at least one of the actuators 8, 9, in the present embodiment with the actuator 8, wherein they extend substantially beyond the centreline of the stem of the actuator 8. Said threaded plates 19, 20 are attached at the first end thereof to a base 21 of the follower 7, which is further either separably or permanently associated with the light module 2. Furthermore, each threaded plate 19, 20 is formed in the area of the free end thereof and at the sides facing each other with a chamfer 22, which facilitates placing the actuator 8 and, respectively, 9 between the threaded plates 19, 20. Moreover, the threaded plates 19, 20 are formed in the region of cooperation with the threaded section 14 of the actuator 8 and, respectively, 9 with a threaded section 22 comprising an internal thread 23 provided for cooperation with an external thread 24 of the threaded section 14. Said thread 23, 24 is preferably selected as a fine thread.

Said threaded section 22 comprising the internal thread 23 is formed on an arc 25, the centreline thereof approximately corresponds to the horizontal centreline 5 of the lighting body and, respectively, the light module 2, the latter is to be rotated about. Said arc 25 lies in a vertical plane extending through the centreline of the threaded section 14 and, respectively, the actuator 8, and in parallel with the fork-like structure 18 and, respectively, in parallel with the threaded plates 19, 20. Furthermore, said threaded section 22, which is provided in the fork-like structure 18, is formed in a manner to compensate movements over the circular arc 25 and ensures, in each position of the fork-like structure 18 relative to the actuator 8, a constant contact in several threads between the outer thread 24 of the threaded section 14 and the inner thread 23 of the fork-like structure 18 within the required positioning region of the lighting module 2.

Said device 4 for positioning the light module 2 provides for the lighting module 2 to be positioned in the case 1 of the lighting body 2, thus protecting the elements of the lighting body against the overload in the terminal positioning region. Said protection is achieved in a manner, that said shifting section 15 which is associated with each end of the threaded section 14 is pushed, in each extreme rotated position of the fork-like structure 18 and with continuous entering of torque into the actuator 8, between the threaded plates 19, 20. Since the radial dimension of the shifting section 15 is greater than the radial dimension of the threaded section 14 and, therefore, greater than the spacing between the threaded plates 19, 20, said shifting section 15 pushes the threaded plates 19, 20 apart. It is obtained in this manner that the outer thread 24 disengages the internal thread 23 and simultaneously enables skipping of said threads 23, 24 with respect to each other. Due to continuous entering the torque, the actuator 8 can still rotate about its centreline, however, the follower 7 can not be moved any more, and as a result the threads 23, 24 remain undamaged.

## Claims

1. A device for positioning a lighting body of a vehicle, such as a headlamp or a fog lamp, comprising:
a case (1) with an articulated light module (2) arranged therein, such as a light source or a reflector of the lighting body, said module (2) being rotatable about a centreline (3) thereof which extends approximately horizontally and/or approximately perpendicularly to the direction of the luminous flux, when the device for positioning a lighting body is mounted to the vehicle, and
a device (4) for positioning the light module (2), wherein the device (4) for positioning the light module (2) with respect to a horizontal centreline (5) of the lighting body and, respectively, with regard to the ideal direction of the luminous flux is arranged on said case (1), said device (4) for positioning the light module (2) is formed of at least two actuators (8, 9) set at an angle with respect to each other and mutually cooperating, and a follower (7) associated with said light module (2),
wherein said follower (7) is formed with a fork-like structure (18) comprising threaded plates (19, 20) that extend mutually in parallel and are spaced with regard to each other and are attached at the first end thereof to a base (21) of the follower (7), said threaded plates (19, 20) being formed in the region of cooperation with a threaded section (14) of the at least one (8) of the actuators (8, 9) with a threaded section (22), which comprises an internal thread (23) provided for cooperation with an outer thread (24) of the threaded section (14), **characterised in that** each said threaded section (22) comprising the internal thread (23) is formed on an arc (25) a centreline thereof approximately corresponds to the horizontal centreline (5) of the lighting body and, respectively, to the centreline (3) of the light module (2), the latter is to be rotated about and wherein said arc (25) lies in a vertical plane extending through the centreline of the threaded section (14) and in parallel with the threaded plates (19, 20), when the device for positioning a lighting body is mounted to the vehicle, wherein said threaded section (22) which is provided in the forklike structure (18) is configured to compensate movements over the circular arc (25) and ensures, in each position of the fork-like structure (18) relative to the actuator (8), a constant contact in several threads between the outer thread (24) of the threaded section (14) and the inner thread (23) of the fork-like structure (18) within the required positioning region of the light module (2).

2. A device according to claim 1, **characterized in that** each actuator (8, 9) comprises at the place of the cooperation with the opposite actuator (9, 8) a transfer means (10, 11) mating with each other provided for a transfer of motion form the first actuator (8, 9) to the second actuator (9, 8).

3. A device according to claim 2, **characterized in that** the transfer means (10, 11) are selected as a pair of bevelled gears (10, 11).

4. A device according to claims 1 to 3, **characterized in that** each actuator (8, 9) comprises a stem (12, 13), at least part of the stem (12, 13) of at least one of the actuators (8, 9) being formed in the region of engagement and cooperation with said follower (7) with a threaded section (14), wherein a shifting section (15) being associated with each end of the threaded section (14), and at least one of the ends of each actuator (8, 9) is formed with a projection and/or a depression (16, 17) for engaging a tool to enter a torque into at least one of the actuators (8, 9).

5. A device according to claim 4, **characterized in that** the radial dimension of the shifting section (15) is greater than the radial dimension of the threaded section (14).

6. A device according to any of the preceding claims, **characterized in that** said device (4) for positioning the light module (2) is connected with said follower (7) by means of a force- locking joint and/or a form-locking joint.

7. A device according to any of the preceding claims, **characterized in that** said follower (7) can be formed either as an integral part of the light module (2), or as a separate element attached to the light module (2) in a manner known per se.

8. A lighting body for a vehicle, wherein the position of the lighting body can be set by a device according to any of the preceding claims.

9. A motor vehicle provided with a lighting body for a vehicle wherein the position of the lighting body can be set by a device according to any of the preceding claims.

## Patentansprüche

1. Vorrichtung zur Positionierung eines Beleuchtungskörpers eines Fahrzeugs, beispielsweise eines Scheinwerfers oder eines Nebelscheinwerfers, umfassend:
ein Gehäuse (1) mit einem darin angeordneten gelenkigen Lichtmodul (2), beispielsweise einer Lichtquelle oder einem Reflektor des Beleuchtungskörpers, wobei das Modul (2) um eine Mittellinie (3) davon drehbar ist, die sich annähernd horizontal und/oder annähernd senkrecht zur Richtung des Lichtstroms erstreckt, wenn die Vorrichtung zum Positionieren eines Beleuchtungskörpers am Fahrzeug montiert ist, und eine Vorrichtung (4) zum Positionieren des Lichtmoduls (2) in Bezug auf eine horizontale Mittellinie (5) des Beleuchtungskörpers beziehungsweise in Bezug auf die ideale Richtung des Lichtstroms, die an dem Gehäuse (1) angeordnet ist, wobei die Vorrichtung (4) zum Positionieren des Lichtmoduls (2) aus mindestens zwei Aktuatoren (8, 9) ausgebildet ist, die in Bezug zueinander in einem Winkel eingestellt sind und wechselseitig zusammenwirken, und ein Hubglied (7), das dem Lichtmodul (2) zugeordnet ist,
wobei das Hubglied (7) mit einer gabelähnlichen Struktur (18) ausgebildet ist, umfassend Gewindeplatten (19, 20), die sich zueinander parallel erstrecken, in Bezug zueinander beabstandet sind und an dem ersten Ende davon an einer Basis (21) des Hubglieds (7) angebracht sind, wobei die Gewindeplatten (19, 20) in der Region des Zusammenwirkens mit einem Gewindeabschnitt (14) des mindestens einen (8) der Aktuatoren (8, 9) mit einem Gewindeabschnitt (22) ausgebildet sind, der ein für ein Zusammenwirken mit einem Außengewinde (24) des Gewindeabschnitts (14) bereitgestelltes Innengewinde (23) umfasst,
**dadurch gekennzeichnet, dass**
jeder das Innengewinde (23) umfassende Gewindeabschnitt (22) an einem Bogen (25) ausgebildet ist, wobei eine Mittellinie davon annähernd einer horizontalen Mittellinie (5) des Beleuchtungskörpers beziehungsweise der Mittellinie (3) des Lichtmoduls (2), um die das letztere zu drehen ist, entspricht,
und wobei der Bogen (25) in einer vertikalen Ebene liegt, die sich durch die Mittellinie des Gewindeabschnitts (14) und parallel zu den Gewindeplatten (19, 20) erstreckt, wenn die Vorrichtung zum Positionieren eines Beleuchtungskörpers an dem Fahrzeug montiert ist, wobei der in der gabelähnlichen Struktur (18) bereitgestellte Gewindeabschnitt (22) dazu konfiguriert ist, Bewegungen über den Kreisbogen (25) auszugleichen, und in jeder Position der gabelähnlichen Struktur (18) relativ zum Aktuator (8) einen konstanten Kontakt in mehreren Gewinden zwischen dem Außengewinde (24) des Gewindeabschnitts (14) und dem Innengewinde (23) der gabelähnlichen Struktur (18) innerhalb der erforderlichen Positionierungsregion des Lichtmoduls (2) sicherstellt.

2. Vorrichtung nach Anspruch 1, **dadurch gekennzeichnet, dass** jeder Aktuator (8, 9) an der Stelle des Zusammenwirkens mit dem gegenüberliegenden Aktuator (8, 9) ein Übertragungsmittel (10, 11) umfasst, zueinander passend bereitgestellt für eine Übertragung von Bewegung von dem ersten Aktuator (8, 9) zu dem zweiten Aktuator (9, 8).

3. Vorrichtung nach Anspruch 2, **dadurch gekennzeichnet, dass** die Übertragungsmittel (10, 11) als ein Paar angeschrägter Zahnräder (10, 11) ausgewählt sind.

4. Vorrichtung nach einem der Ansprüche 1 bis 3, **dadurch gekennzeichnet, dass** jeder Aktuator (8, 9) einen Schaft (12, 13) umfasst, wobei mindestens ein Teil des Schafts (12, 13) von mindestens einem der Aktuatoren (8, 9) in der Region des Eingreifens und Zusammenwirkens mit dem Hubglied (7) mit einem Gewindeabschnitt (14) ausgebildet ist, wobei jedem Ende des Gewindeabschnitts (14) ein sich verschiebender Abschnitt (15) zugeordnet ist und mindestens eines der Enden jedes Aktuators (8, 9) mit einem Vorsprung und/oder einer Vertiefung (16, 17) für das Eingreifen eines Werkzeugs zum Einleiten eines Drehmoments in mindestens einen der Aktuatoren (8, 9) ausgebildet ist.

5. Vorrichtung nach Anspruch 4, **dadurch gekennzeichnet, dass** die radiale Abmessung des sich verschiebenden Abschnitts (15) größer als die radiale Abmessung des Gewindeabschnitts (14) ist.

6. Vorrichtung nach einem der vorangehenden Ansprüche, **dadurch gekennzeichnet, dass** die Vorrichtung (4) zum Positionieren des Lichtmoduls (2) mittels einer kraftschlüssigen Verbindung und/oder einer formschlüssigen Verbindung mit dem Hubglied (7) verbunden ist.

7. Vorrichtung nach einem der vorangehenden Ansprüche, **dadurch gekennzeichnet, dass** das Hubglied (7) entweder als integraler Bestandteil des Lichtmoduls (2) oder als ein separates Element, angebracht in einer per se bekannten Weise an dem Lichtmodul (2), ausgebildet sein kann.

8. Beleuchtungskörper für ein Fahrzeug, wobei die Position des Beleuchtungskörpers durch eine Vorrichtung nach einem der vorangehenden Ansprüche eingestellt werden kann.

9. Kraftfahrzeug, versehen mit einem Beleuchtungskörper für ein Fahrzeug, wobei die Position des Beleuchtungskörpers durch eine Vorrichtung nach einem der vorangehenden Ansprüche eingestellt werden kann.

## Revendications

1. Dispositif de positionnement d'un corps d'éclairage d'un véhicule, tel qu'un phare ou un antibrouillard, comprenant :
un boîtier (1) dans lequel se trouve un module d'éclairage articulé (2), tel qu'une source de lumière ou un réflecteur du corps d'éclairage, ledit module (2) pouvant tourner autour d'un axe central (3) qui s'étend approximativement à l'horizontale et/ou approximativement à la perpendiculaire par rapport à la direction du flux de lumière lorsque le dispositif de positionnement d'un corps d'éclairage est monté sur le véhicule et un dispositif (4) de positionnement du module d'éclairage (2) par rapport à un axe central horizontal (5) du corps d'éclairage et, respectivement, par rapport à la direction idéale du flux de lumière est monté sur ledit boîtier (1), ledit dispositif (4) de positionnement du module d'éclairage (2) étant constitué d'au moins deux actionneurs (8, 9) disposés de manière angulaire l'un par rapport à l'autre et interagissant, et d'un dispositif de suivi (7) associé audit module d'éclairage (2), ledit dispositif de suivi (7) étant constitué d'une structure en forme de fourche (18) comprenant des plaques filetées (19, 20) qui s'étendent parallèlement, sont espacées l'une de l'autre et sont fixées à leur première extrémité à une base (21) du dispositif de suivi (7), lesdites plaques filetées (19, 20) étant constituées dans la zone d'interaction d'une section filetée (14) d'au moins un (8) des actionneurs (8, 9) avec une section filetée (22), qui comprend un filetage intérieur (23) prévu pour l'interaction avec un filetage extérieur (24) de la section filetée (14),
**caractérisé en ce que**
chaque section filetée (22) comprenant le filetage intérieur (23) est formée sur un arc (25) dont un axe média correspond environ à l'axe médian horizontal (5) du corps d'éclairage et, respectivement, à l'axe médian (3) du module d'éclairage (2), autour duquel ce dernier doit pivoter
et dans lequel ledit arc (25) se situe dans un plan vertical s'étendant à travers l'axe central de la section filetée (14) et parallèlement aux plaques filetées (19, 20) lorsque le dispositif de positionnement d'un corps d'éclairage est monté sur le véhicule, dans lequel ladite section filetée (22) qui est fournie dans la structure en forme de fourche (18) est configurée de manière à compenser les mouvements sur l'arc de cercle (25) et assure, dans chaque position de la structure en forme de fourche (18) par rapport à l'actionneur (8), un contact constant sur plusieurs filets entre le filetage extérieur (24) de la section filetée (14) et le filetage intérieur (23) de la structure en forme de fourche (18) dans la zone de positionnement requise du module d'éclairage (2).

2. Dispositif selon la revendication 1, **caractérisé en ce que** chaque actionneur (8, 9) comprend à l'endroit de l'interaction avec l'actionneur opposé (9, 8) des moyens de transfert (10, 11) s'accouplant l'un à l'autre et permettant de transférer le mouvement du premier actionneur (8, 9) au second actionneur (9, 8).

3. Dispositif selon la revendication 2, **caractérisé en ce que** les moyens de transfert (10, 11) sont choisis comme une paire d'engrenages biseautés (10, 11).

4. Dispositif selon les revendications 1 à 3, **caractérisé en ce que** chaque actionneur (8, 9) comprend une tige (12, 13), au moins une partie de la tige (12, 13) d'au moins un des actionneurs (8, 9) étant constituée dans la zone d'engagement et d'interaction avec ledit dispositif de suivi (7) d'une section filetée (14), une section de décalage (15) étant associée à chaque extrémité de la section filetée (14), et au moins l'une des extrémités de chaque actionneur (8, 9) étant constituée d'une saillie et/ou d'une dépression (16, 17) pour l'engagement d'un outil afin d'introduire un couple dans au moins l'un des actionneurs (8, 9).

5. Dispositif selon la revendication 4, **caractérisé en ce que** la dimension radiale de la section de décalage (15) est supérieure à la dimension radiale de la section filetée (14).

6. Dispositif selon l'une des revendications précédentes, **caractérisé en ce que** ledit dispositif (4) de positionnement du module d'éclairage (2) est relié audit dispositif de suivi (7) au moyen d'une articulation à verrouillage de force et/ou d'une articulation à verrouillage de forme.

7. Dispositif selon l'une des revendications précédentes, **caractérisé en ce que** ledit dispositif de suivi (7) peut être formé soit comme partie intégrante du module d'éclairage (2), soit comme élément séparé fixé au module d'éclairage (2) d'une manière connue en soi.

8. Corps d'éclairage pour un véhicule, dans lequel la position du corps d'éclairage peut être réglée par un dispositif selon l'une des revendications précédentes.

9. Véhicule automobile équipé d'un corps d'éclairage pour un véhicule dans lequel la position du corps d'éclairage peut être réglée par un dispositif selon l'une des revendications précédentes.
